# EUROPEAN PATENT APPLICATION

(11) **EP 4 177 823 A1**
(43) Date of publication of application: **10.05.2023**
(21) Application number: 21206304.4
(22) Date of filing: 03.11.2021
(51) Int. Cl.: G06T 3/40

(54) **PRODUCING AN OUTPUT IMAGE OF A SCENE FROM A PLURALITY OF SOURCE IMAGES CAPTURED BY DIFFERENT CAMERAS**

(71) Applicant: Axis AB, 223 69 Lund (SE)
(72) Inventor: Henningsson, Toivo, 223 69 Lund (SE); Ardö, Björn, 223 69 Lund (SE); Sandström, Stefan, 223 69 Lund (SE)
(74) Representative: AWA Sweden AB

(57) **Abstract**

The present inventive concept relates to a method (50), a system (20), and an image processing device (10) for producing an output image (430) of a scene (220) from a plurality of source images (400, 410) captured by different cameras (200, 210). The method (50) comprises: producing (S500) output blocks of the output image (430) by: determining (S502) a contribution to an output block of the output image (430) from each of the plurality of source images (400, 410); upon (504A) the output block having a determined contribution from only one source image: transforming (S506) pixels from the only one source image, thereby producing a transformed block, and outputting (S508) the transformed block from the only one source image as the output block; or upon (504B) the output block having a determined contribution from more than one source image: transforming (S510) pixels from each source image that contributes to the output block, thereby producing a respective transformed block from each source image that contributes to the output block, blending (S512) the transformed blocks from the source images that contribute to the output block, thereby producing a blended block, and outputting (S514) the blended block as the output block.

## Description

### Technical field

The present inventive concept relates to a method, an image processing device, and a system for producing an output image of a scene from a plurality of source images captured by different cameras.

### Background of the invention

Panoramic imaging is a well-known technique for producing images having an enlarged horizontal field of view. A typical implementation of panoramic imaging consists of one or more cameras, which are used to capture multiple images of a scene. The captured images are then aligned and combined into a panoramic image.

When the individual images are combined to produce a panoramic image, their image data typically need to be redistributed in order to properly align features appearing in an overlap of the individual images. However, this redistribution of image data requires high computational and memory resources, in particular as the images resolution of the images tend to increase.

Thus, there exists a need for more efficient stitching algorithms within the art.

### Summary of the invention

It is an object to, at least partly, mitigate, alleviate, or eliminate one or more of the above-identified deficiencies in the art and disadvantages singly or in any combination and solve at least the above-mentioned problem.

According to a first aspect a method for producing an output image of a scene from a plurality of source images captured by different cameras is provided. The method comprising: producing output blocks of the output image by: determining a contribution to an output block of the output image from each of the plurality of source images; upon the output block having a determined contribution from only one source image: transforming pixels from the only one source image, thereby producing a transformed block, and outputting the transformed block from the only one source image as the output block; or upon the output block having a determined contribution from more than one source image: transforming pixels from each source image that contributes to the output block, thereby producing a respective transformed block from each source image that contributes to the output block, blending the transformed blocks from the source images that contribute to the output block, thereby producing a blended block, and outputting the blended block as the output block.

Within the context of this disclosure, a "camera" should be construed as a device capable of capturing an image of a scene. A camera typically comprises circuitry, an image sensor, and imaging optics. Hence, the "different cameras" referred to above may be a single camera system having multiple image sensors and multiple imaging optics. Such camera system may, e.g., be referred to as a panoramic camera.

Within the context of this disclosure, a "block" (e.g. the output block) should be construed as a block of pixels. The block may be a coding unit of the associated image. Hence, the output block may be a coding unit of the output image. The coding unit may, e.g., be a macroblock or a coding tree unit.

By means of the present inventive concept, each output block of the output image can be produced while only image data associated with pixels that actually contribute to the output block currently being produced are stored in memory. For example, in case the contribution to the output block is determined to be from two source images (e.g., if the plurality of source images comprises images captured by two different cameras), only image data associated with pixels from the two source images pertaining to the output block must be stored in memory. Hence, image data of other pixels (i.e. almost the entire source images) need not be stored in memory. Thus, the present method allows for the production of output images (e.g. panoramic and/or stitched images) with reduced memory requirements. This, in turn, allows the present method to be implemented in an image processing pipeline, e.g., as a dedicated chip in an image processing device.

The output blocks of the output image may be produced on a block by block basis in raster order.

In the context of this disclosure, "raster order" or "raster scan order" is the order in which a digital image is read from and/or written to memory (or buffer). A rectangular digital image is usually divided into a sequence of horizontal rows of pixels or blocks of pixels. For such rectangular digital image, "raster order" typically denotes left to right and row by row from the top to the bottom of the digital image. A person skilled in the art is aware that other orders may be used for read/write which may be applicable to the present inventive concept.

An associated advantage is that the present method may be implemented as part of read/write pipeline for digital images.

The transformed blocks may be blended using one or more of a multi-band blending, a content-aware blending, and alpha blending.

An associated advantage with using alpha blending is that it may allow the transformed blocks to be blended using less computational resources than using multi-band blending or content-aware blending.

An associated advantage with using multi-band blending or content-aware blending is that it may allow for an improved blending of the transformed blocks. For example, a visual quality of the blended block may be improved.

The act of determining a contribution to the output block from each of the plurality of source images may comprise: determining, for each source image of the plurality of source images, a respective transformation of the source image to the output image based on an optical layout of the camera used to capture that source image; and determining, for each output block of the output image, which pixels from the plurality of source images that are projected onto the output block using the determined transformations.

An associated advantage is that the computation resources needed to determination of the contribution from each of the plurality of source images to the output block may be reduced. In particular in comparison with a method in which the respective contributions are determined using techniques that analyze content of the plurality of source images, e.g. using object detection etc.

The act of transforming a block from a source image may comprise: determining a transformation of the source image to the output image based on an optical layout of the camera used to capture that source image; and transforming pixels from the source image to the output image using the determined transformation.

An associated advantage is that the computation resources needed to transform pixels from the source image to the output image may be reduced. In particular in comparison with a method in which the transformations of the source images are determined using techniques or algorithms that analyze content (i.e. the content of the depicted scene) of the plurality of source images, e.g. using object detection etc.

The transformation may be a projection of a source image onto a projection surface.

Within the context of this disclosure, "projection surface" should be construed as a mathematical construction onto which image data may be projected. Thus, it should not be construed as a projection screen or a digital screen. The projection surface may have a position in a three-dimensional coordinate system, and each camera may have a corresponding position in the three-dimensional coordinate system. Thus, an image captured by a camera depicting a portion of the imaged scene may also have a corresponding position in the three-dimensional coordinate system. The position in the three-dimensional coordinate system of the image may depend on the optical layout of the camera used to capture the image. From these relationships, a transformation may be determined which projects the image data associated with an image onto the projection surface.

The projection surface may be one of a planar surface, a cylindrical surface, and a spherical surface.

According to a second aspect an image processing device for producing an output image of a scene from a plurality of source images captured by different cameras is provided. The image processing device comprising circuitry configured to execute: an acquisition function configured to acquire the plurality of source images; wherein the circuitry is configured to produce output blocks of the output image by executing: a contribution function configured to determine a contribution to an output block of the output image from each of the plurality of source images, a transformation function configured to: upon the output block having a determined contribution from only one source image, transform pixels from the only one source image, thereby producing a transformed block, or upon the output block having a determined contribution from more than one source image, transform pixels from each source image that contributes to the output block, thereby producing a respective transformed block from each source image that contributes to the output block, and to blend the transformed blocks from the source images that contribute to the output block, thereby producing a blended block, and an output function configured to output the transformed block from the only one source image or the blended block as the output block.

The above-mentioned features of the first aspect, when applicable, apply to this second aspect as well. In order to avoid undue repetition, reference is made to the above.

The circuitry may be configured to produce output blocks of the output image on a block by block basis in raster order.

The transformation function may be configured to blend the transformed blocks by being configured to use one or more of a multi-band blending, a content-aware blending, and alpha blending.

The contribution function may be configured to determine a contribution to an output block of the output image from each of the plurality of source images by being configured to: determine, for each source image of the plurality of source images, a respective transformation of the source image to the output image based on an optical layout of the camera used to capture that source image; and determine, for each output block of the output image, which pixels from the plurality of source images that are projected onto the output block using the determined transformations.

The transformation function may be configured to transform a block from a source image by being configured to: determine a transformation of the source image to the output image based on an optical layout of the camera used to capture that source image; and transform pixels from the source image to the output image using the determined transformation.

The transformation may be a projection of a source image onto a projection surface.

According to a third aspect a system is provided. The system comprising: a plurality of cameras, wherein each camera of the plurality of cameras is configured to capture a respective source image of a scene; and an image processing device according to the second aspect.

The above-mentioned features of the first aspect and/or the second aspect, when applicable, apply to this third aspect as well. In order to avoid undue repetition, reference is made to the above.

According to a fourth aspect, a non-transitory computer-readable storage medium is provided. The non-transitory computer-readable storage medium comprising program code portions which, when executed on a device having processing capabilities performs the method according to the first aspect.

The above-mentioned features of the first aspect, the second aspect, and/or the third aspect, when applicable, apply to this fourth aspect as well. In order to avoid undue repetition, reference is made to the above.

A further scope of applicability of the present disclosure will become apparent from the detailed description given below. However, it should be understood that the detailed description and specific examples, while indicating preferred variants of the present inventive concept, are given by way of illustration only, since various changes and modifications within the scope of the inventive concept will become apparent to those skilled in the art from this detailed description.

Hence, it is to be understood that this inventive concept is not limited to the particular steps of the methods described or component parts of the systems described as such method and system may vary. It is also to be understood that the terminology used herein is for purpose of describing particular embodiments only and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### Brief description of the drawings

The above and other aspects of the present inventive concept will now be described in more detail, with reference to appended drawings showing variants of the inventive concept. The figures should not be considered limiting the inventive concept to the specific variant; instead they are used for explaining and understanding the inventive concept. As illustrated in the figures, the sizes of layers and regions are exaggerated for illustrative purposes and, thus, are provided to illustrate the general structures of variants of the present inventive concept. Like reference numerals refer to like elements throughout.
Figure 1 illustrates an image processing device for producing an output image of a scene from a plurality of source images captured by different cameras.
Figure 2 illustrates a system comprising the image processing device and two cameras, each camera configured to capture images of a scene.
Figure 3 illustrates a coordinate system corresponding to Fig. 2.
Figure 4A illustrates two source images.
Figure 4B illustrates an arrangement of image data associated with pixels of the source images of Fig. 4A that contribute to an output image.
Figure 4C illustrates the output image formed using the two source images of Fig. 4A and the arrangement of Fig. 4B.
Figure 5 is a block scheme of a method for producing an output image of a scene from a plurality of source images captured by different cameras.

### Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

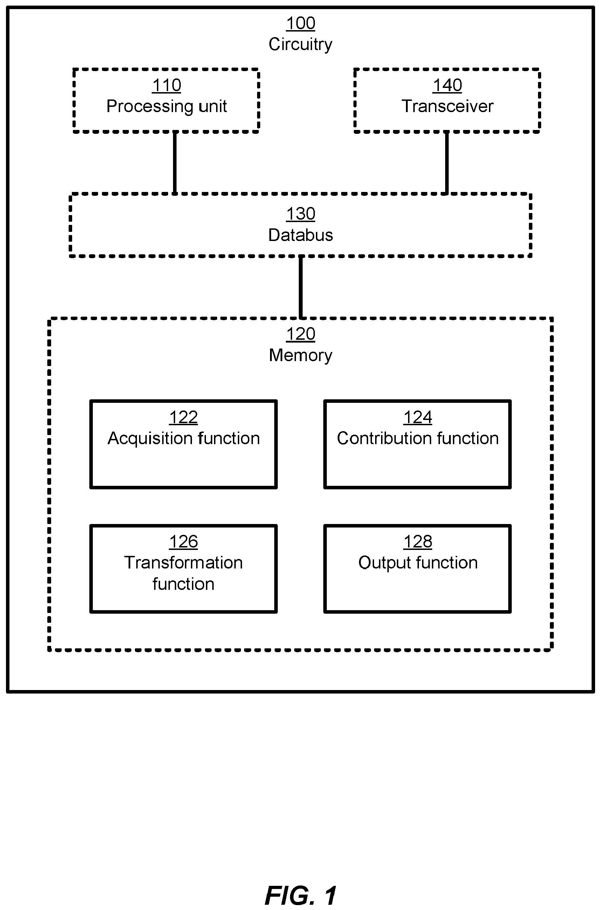

An image processing device and a method for producing an output image of a scene from a plurality of source images will now be described with reference to Fig. 1 - Fig. 5. In the following, the image processing device will be described as part of a system further comprising two cameras. Each camera is configured to capture a respective source image of a scene. However, it is to be understood that the source images may be captured previously and stored on a non-transitory computer-readable storage medium. The image processing device may then be configured to retrieve the stored source images from the non-transitory computer-readable storage medium.

Figure 1 illustrates an image processing device 10 for producing an output image of a scene from a plurality of source images captured by different cameras.

The image processing device 10 comprises circuitry 100. The circuitry 100 may comprise a processing unit 110 and/or a memory 120. The circuitry 100 may further comprise a data bus 130 and/or a transceiver 140. The processing unit 110 and the memory 120 may be configured to communicate via the data bus 130.

The processing unit 110 may be a central processing unit and/or a graphical processing unit.

The memory 120 may be a non-transitory computer-readable storage medium. The memory 120 may be configured to store one or more program code portions. Each program code portion of the one or more program code portions may correspond to a function. The function may be executable by the processing unit 110. In the following, when the circuitry 100 is described as being configured to execute a specific function, the processing unit 110 may execute program code portions corresponding to the specific function. Put differently, one or more functions performed by the circuitry 100 may be software implemented. However, it is to be understood that one or more of the functions of the circuitry 100 may be hardware implemented and/or as a combination of hardware and software. For example, one or more functions of the circuitry 100 may be implemented as a dedicated hardware function and/or as a field-programmable gate array (FPGA).

The transceiver 140 may be configured to receive and transmit data. The transceiver 140 may be a wired and/or a wireless transceiver. For example, the transceiver 140 may be configured to communicate via Wi-Fi. However, the skilled person would be aware of a range of different communication technologies that would be suitable for implementation in the circuitry 100.

The circuitry 100 is configured to execute an acquisition function 122, a contribution function 124, a transformation function 126, and an output function 128. As is illustrated in Fig. 1, the memory 120 may be configured to store program code portions corresponding to the acquisition function 122, the contribution function 124, the transformation function 126, and the output function.

The acquisition function 122 is configured to acquire the plurality of source images. The acquisition function 122 may be configured to acquire the plurality of source images from two or more cameras. Put differently, the acquisition function 122 may be configured to control two or more cameras to capture the plurality of source images. The acquisition function 122 may be configured to acquire the plurality of source images from a non-transitory computer-readable storage medium which is configured to store the plurality of source images. Hence, the plurality of source images may have been acquired by two or more cameras and stored on a computer-readable storage medium which the acquisition function 122 is configured to retrieve. The acquisition function 122 may be configured to acquire the plurality of source images from a different device, e.g. a server, via the transceiver 140.

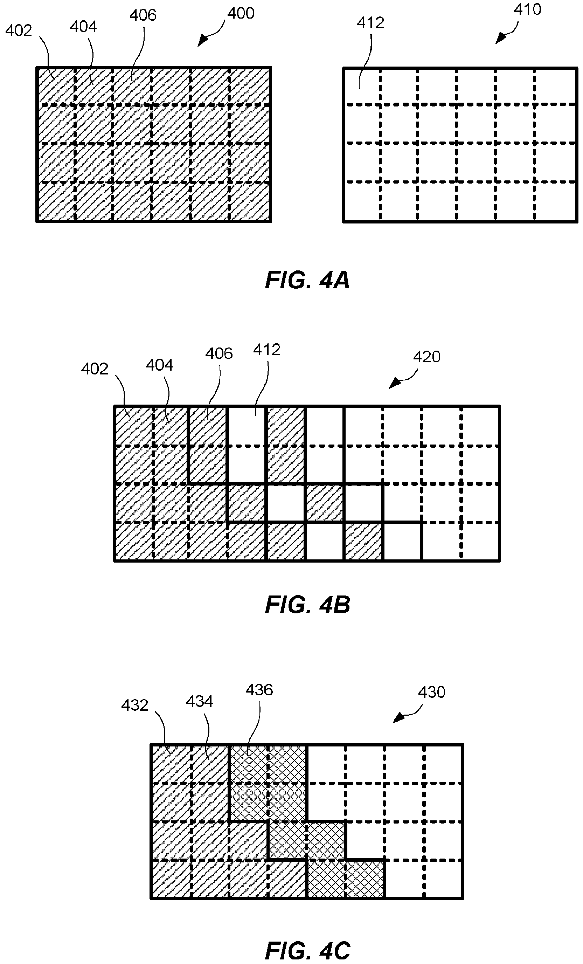

The circuitry 100 is configured to produce S500 output blocks of the output image by executing the contribution function 124, the transformation function 126, and the output function 128. The circuitry 100 may be configured to produce S500 output blocks of the output image on a block by block basis in raster order. By producing the output blocks in raster order, image data associated with the pixels that contribute to the output block may be arranged in an efficient manner. Such arrangement of image data will be discussed below in connection with the description of Fig. 4A, Fig. 4B, and Fig. 4C.

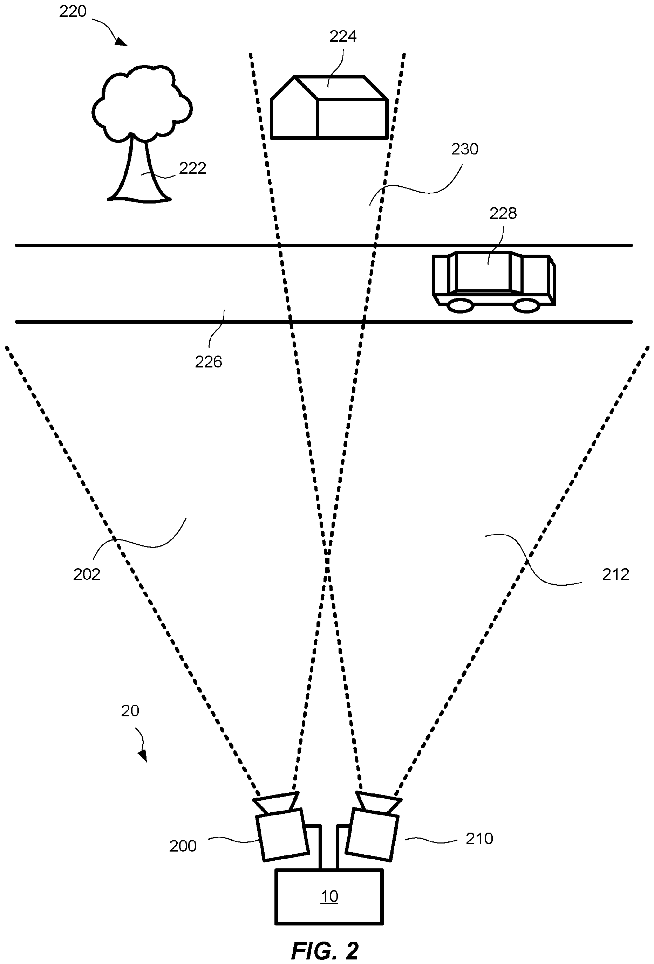

The contribution function 124 is configured to determine S502 a contribution to an output block of the output image from each of the plurality of source images. The contribution function 124 may be configured to determine S502 a contribution to an output block of the output image from each of the plurality of source images by being configured to determine S516, for each source image of the plurality of source images, a respective transformation of the source image to the output image based on an optical layout of the camera used to capture that source image, and determine S518, for each output block of the output image, which pixels from the plurality of source images that are projected onto the output block using the determined transformations. The transformation may be a projection of a source image onto a projection surface. Examples of how the transformation may be determined will be described in connection with Fig. 2. The projection surface may be one of a planar surface, a cylindrical surface, and a spherical surface.

The transformation function 126 is configured to, upon 504A the output block having a determined contribution from only one source image, transform S506 pixels from the only one source image, thereby producing a transformed block. The transformation function 126 is further configured to, upon 504B the output block having a determined contribution from more than one source image, transform S510 pixels from each source image that contributes to the output block, thereby producing a respective transformed block from each source image that contributes to the output block, and to blend S512 the transformed blocks from the source images that contribute to the output block, thereby producing a blended block. The transformation function 126 may be configured to blend S512 the transformed blocks by being configured to use one or more of multi-band blending, content-aware blending, and alpha blending. The transformation function 126 may be configured to transform S506, S510 a block from a source image by being configured to determine S520 a transformation of the source image to the output image based on an optical layout of the camera used to capture that source image, and to transform S522 pixels from the source image to the output image using the determined transformation. The transformation may be a projection of a source image onto a projection surface. The transformation that may be used by the contribution function 124 and the transformation function 126 may be the same transformation. Hence, the transformation may only need to be determined once.

The output function 128 is configured to output S508, S514 the transformed block from the only one source image or the blended block as the output block. The output function 128 may be configured to output the output block to a subsequent step and/or process block in an image processing pipeline. It is to be understood that the image processing pipeline may comprise one or more subsequent steps. The subsequent step or steps in the image processing pipeline may, e.g., be one or more of noise filtering, tone mapping, sharpening, matrixing, etc. The skilled person would be aware of other common image processing blocks that may be part of the image processing pipeline. The output function 128 may be configured to output the output block by storing the output block on the memory 120 and/or by transmitting it to an external storage via the transceiver 140.

Thus, each output block of the output image can be produced while only image data associated with pixels that actually contribute to the output block currently being produced are stored in working memory (e.g. cache memory). For example, in case the contribution to the output block is determined to be from two source images (e.g., if the plurality of source images comprises images captured by two different cameras), only image data associated with pixels from the two source images pertaining to the output block must be stored in working memory. Hence, image data of other pixels (i.e. almost the entire source images) need not be stored in working memory. Thus, the present method allows for the production of output images (e.g. panoramic and/or stitched images) with reduced working memory requirements. This, in turn, allows the present method to be implemented in an image processing pipeline, e.g., as a dedicated chip in an image processing device 10. Hence, the present method may, e.g., be implemented as part of read/write pipeline for digital images.

An example scenario in which a system 20 comprising an image processing device 10, a first camera 200, and a second camera 210 will be described. The image processing device 10 of Fig. 2 may correspond to the image processing device 10 described in connection with Fig. 1. It is further to be understood that the number of cameras is an example only, and the skilled person realizes that more than two cameras may be used in the system 20.

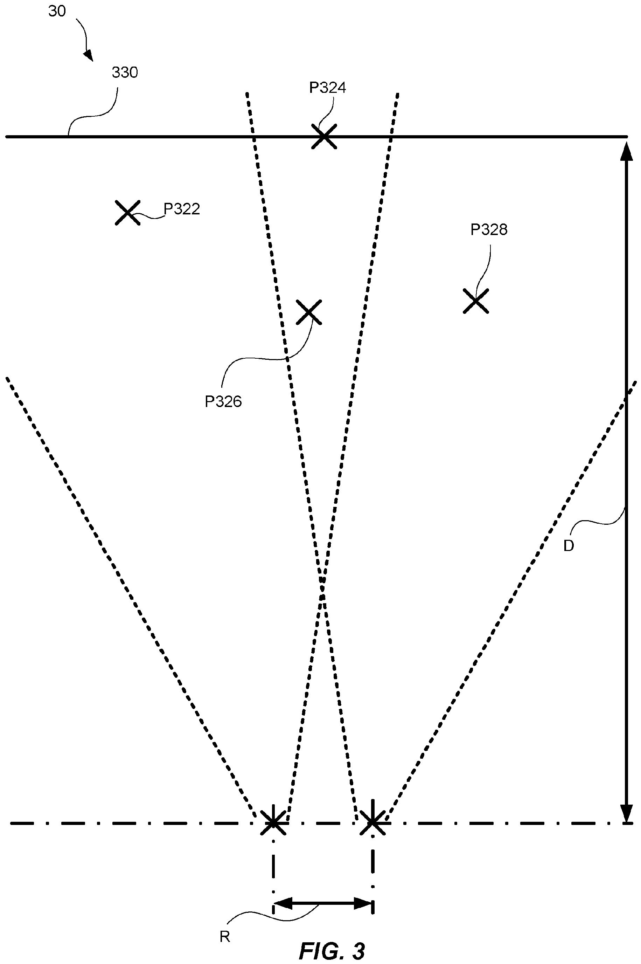

In the scenario illustrated in Fig. 2, the two cameras 200, 210 are arranged to image a scene 220. The imaged scene 220 comprises a tree 222, a house 224, a road 226, and a car 228. The two cameras 200, 210 may be configured to capture still images and/or video of the scene 220. The scenario illustrated in Fig. 2 may be represented by a coordinate system 30, e.g., as illustrated in Fig. 3. The coordinate system 30 illustrated in Fig. 3 is a two-dimensional representation of a three-dimensional coordinate system. In the example of Fig. 3, the two-dimensional representation is a top view of the three-dimensional coordinate system. Put differently, the coordinate system 30 of Fig. 3 may be a two-dimensional projection of the three-dimensional coordinate system representing the scene 220 of Fig. 2. Hence, the projection surface 330 which is a two-dimensional surface in the three-dimensional coordinate system is represented by a line in the coordinate system 30 of Fig. 3. Each camera of the two cameras 200, 210, the tree 222, the house 224, the car 228, and the road 226 has a position in the scene 220. Further, each position in the scene 220 of Fig. 2 corresponds to a position P300, P310, P322, P324, P326, P328 in the coordinate system 30 of Fig. 3. It is to be understood that a position in the coordinate system 30 of Fig. 3 may be a point having no spatial extension, whereas the object positioned at the corresponding position in the scene 220 does have a spatial extension. The skilled person realizes that the position of an object in the scene 220 and its corresponding position in the coordinate system 30 may be defined in a plurality of different ways depending on the precision needed. For example, the position of the first camera 200 may be the position of an image sensor of the first camera 200. As different example, the position of the first camera 200 may be the position of an entrance aperture of imaging optics of the first camera 200. As a further example, the road 226 has a spatial extension, and its position P326 in the coordinate system 30 may be defined as a specific point. For example, in case the road 226 is of interest (instead of the house 224 as is the case in the example of Fig. 3), the projection surface 330 may be positioned such that it intersects a plurality of points on the road 226.

As is illustrated in Fig. 2, the first camera 200 may image a first portion 202 of the scene 220 comprising the tree 222, the house 224, and a first portion of the road 226. The second camera 210 may image a second portion 212 of the scene 220 comprising the house 224, the car 228, and a second portion of the road 226. As is illustrated in Fig. 2, the first portion 202 of the scene 220 and the second portion 212 of the scene 220 have an overlap 230. The house 224 and a third portion of the road 226 is present in the overlap 230. When the images/videos captured by the two cameras 200, 210 is combined (e.g. by stitching) to an output image (e.g. a panoramic image), image data associated with the individual images may need to be transformed. For example, the image data of the individual images may be transformed by projecting the image data onto a projections surface. As illustrated in the example of Fig. 2, the first camera 200 images a first portion of the scene 220 and the second camera 210 images a second portion of the scene 220. Due to the first camera 200 and the second camera 210 being arranged at different positions, the first image and the second image may depict a common feature (e.g. the house 224) differently. This may, e.g., be due to parallax. In order to produce an output image, the image data may be transformed such that common features are aligned between the first image and the second image. This may be done by projecting the image data onto a common projection surface 330. The common projection surface 330 is a mathematical construction which may be positioned in the coordinate system 30. The projection surface 330 may be positioned depending on which features of the scene 220 which are of interest to depicted. In the example of Fig. 2 and Fig. 3, the projection surface 330 is positioned such that it intersects the position P324 of the house 224. By doing so, features of the house 224 may be aligned between the first source image and the source second image. However, features in the overlap appearing at other distances (e.g. the road 226) may be misaligned when the output image is formed. This may be an effect of parallax.

As is illustrated in Fig. 3, the projection surface 330 is positioned at a projection distance D that corresponds to the distances between the position P300 of the first camera 200 and the position P324 of the house 224, and between position P310 of the second camera 210 and the position P324 of the house 224. In the example of Fig. 3, the distances between the first camera 200 and the house 224, and between the second camera 210 and the house 224 are the same, but it is to be understood that they may be different. The projection distance D may be set manually by a user of the system 20. The projection distance D may be set automatically, e.g. detecting an object detection within the scene 220 using an object detection algorithm, and then determining the projection distance D to the detected object using radar measurements and/or by using stereo photography (e.g. by using the cameras 200, 210 of the system 20). As is seen in Fig. 3, the first camera 200 and the second camera 210 are separated by a distance R. By knowing this distance R and determining how an object is shifted between an image captured by the first camera 200 and an image captured by the second camera 210, a distance to the object may be determined. The distance R is typically of the order of centimeters (or tens of centimeters). Distances in the scene 220 (e.g., between the tree 222 and the house 224) are typically of the order of meters (or tens or hundreds of meters). Other suitable ways of setting the projection distance D is known to the skilled person.

Based on projection distance D, and on the optical layouts of the cameras 200, 210, a transformation that projects the image data onto the projection surface 330 may be determined. The transformation may be determined further based on intrinsic parameters of the cameras 200, 210. For instance, imaging properties (e.g. distortions, magnifications, etc.) of the cameras 200, 210 may be used to determine the transformation. The imaging properties of a camera may be related to the camera's imaging optics and/or image sensor. The transformation may be determined further based on external parameters of the cameras 200, 210. For instance, the positions of the cameras 200, 210 in the coordinate system 30 and/or rotations of the cameras 200, 210 may be used to determine the transformation. The transformation may be determined further based on a shape of the projection surface 330.

Figure 4A illustrates a first source image 400 and a second source image 410. The first source image 400 is captured using a first camera 200, and the second source image 410 is captured using a second camera 210. In this example, the first camera 200 and the second camera 210 are separated horizontally. Put differently, the first camera 200 images a first portion of a scene and the second camera 210 images a second portion of the scene. The cameras 200, 210 may be rotated with respect to each other about a first rotation axis. The first rotation axis may be orthogonal to the two-dimensional coordinate system 30 illustrated in Fig. 3. Hence, the cameras 200, 210 in Fig. 2 may be rotated about an axis pointing out of (or into) the paper, i.e. the surface on which Fig. 2 is shown/illustrated. Thereby, the first and second portions may be shifted along the direction of rotation. Further, the first camera 200 and/or the second camera 210 may be rotated about a respective optical axis with respect to each other. Put differently, the first camera 200 may be rotated about an optical axis of the first camera 200, and/or the second camera 210 may be rotated about an optical axis of the second camera 210. This may have the effect that an overlap between images 400, 410 captured by the first camera 200 and the second camera 210 is not vertical in the captured images 400, 410. The same effect may be due to the imaging optics used by one or both of the cameras 200, 210. It is, however, to be understood that the first and second cameras 200, 210 may be separated in other directions, and that their imaged portions of the scene are shifted accordingly.

When an output image 430 is formed from the first source image 400 and the second source image 410, the contribution from the first source image 400 and the second source image 410 to each block (i.e. output block) of the output image 430 are determined. This may, e.g., be based on a transformation as discussed above in connection with Fig. 1, Fig. 2, and Fig. 3. After the contribution to an output block of the output image 430 has been determined, pixels from the source images 400, 410 that contribute to the output block is used to form (e.g. by transforming, or by transforming and blending) the output block.

Image data associated with pixels of the first source image 400 and the second source image 410 that contribute to the output image 430 may be arranged in an arrangement 420 (illustrated in Fig. 4B) which may be processed efficiently, and the formed output image 430 is illustrated in Fig. 4C. For an output block of the output image 430 having a determined contribution from only one of the first source image 400 and the second source image 410, only image data associated with pixels from that source image 400, 410 are used to form the output block. This is the case for a first output block 432 and a second output block 434 in the example illustrated in Fig. 4C. The first output block 432 is formed using first image data 402 associated with a first set of pixels of the first source image 400. The second output block 434 is formed using second image data 404 associated with a second set of pixels of the first source image 400. In the example of Fig. 4C, the first output block 432 and the second output block 434 are neighboring blocks in the output image 430, and the first image data 402 and the second image data 404 may be arranged such that they are consecutively processed. The first image data 402 and the second image data 404 may be arranged in a processing order, e.g. in raster order. Hence, the image data may be arranged in a rectangular pattern (e.g. as a matrix), and the image data may be processed line by line from the top left block towards the top right block. A skilled person realizes that other processing orders may be used when forming the output image, and how this affects the arrangement of the image data.

For an output block having a determined contribution from the first source image 400 and the second source image 410, image data associated with pixels from the first source image 400 and the second source image 410 are used to form the output block. This is the case for a third output block 436 of the output image 430 in the example illustrated in Fig. 4C. The third output block 436 is formed by third image data 406 associated with a third set of pixels of the first source image 400 and fourth image data 412 associated with a first set of pixels of the second source image 410. A blended block is formed by blending the third image data 406 and the fourth image data 412, and the blended block is output as the third output block 436. The third image data 406 and the fourth image data 412 may be blended into the blended block using one or more of multi-band blending, content-aware blending, and alpha blending. As is illustrated in the example of Fig. 4B, the third image data 406 and the fourth image data 412 may be arranged in an interleaved manner (compared to the processing order). Put differently, the third image data 406 and the fourth image data 412 may be arranged such that they are consecutively processed (e.g. in raster order).

In case the image data is arranged in the manner illustrated in the example of Fig. 4B, the output image 430 may be formed while only either image data associated with pixels that contribute to two consecutive output blocks or image data associated with pixels that contribute to one blended block which is output as a single output block are stored in working memory simultaneously. This may be implemented by, in processing order, comparing image data at a current position in the arrangement 420 with image data at a subsequent position in the arrangement 420. In case the image data at the current position of the arrangement 420 and at the subsequent position of the arrangement 420 are associated with one source image, the output block is formed by the image data at the current position of the arrangement. In case the image data at the current position of the arrangement 420 and at the subsequent position of the arrangement 420 are associated with more than one source image, the output block is formed using the image data at the current position of the arrangement 420 and at the subsequent position of the arrangement 420. In the example of Fig. 4B, comparing the first image data 402 and the second image data 404 indicates that they are associated with the first source image 400, and the first image data 402 is then used to form the first output block 432. After the first output block 432 if formed, the first image data 402 may be removed from working memory. The second image data 404 is then compared with the third image data 406 (which may, at this point, be loaded into working memory). This comparison indicates that that the second image data 404 and the third image 406 data are associated with the first source image 400, and the second output block 434 is formed using the second image data 404. After the second output block 434 if formed, the second image data 404 may be removed from working memory. At this point, the fourth image data 412 may be loaded into working memory, and the third image data 406 is compared to the fourth image data 412. This comparison indicates that the third image data 406 and the fourth image data 412 are associated with different source images (i.e. the first source image 400 and the second source image 410, respectively), and the third output block 436 is formed using the third image data 406 and the fourth image data 412. This process may be repeated until all image data has been processed and the output image 430 is formed.

As is seen in the example of Fig. 4C, the overlap (i.e. the output blocks having a contribution from the first source image and the second source image) is not vertical relative to the output image. The present inventive concept allows for a memory-efficient stitching algorithm for images having such non-vertical (or non-horizontal) overlaps relative to the output image.

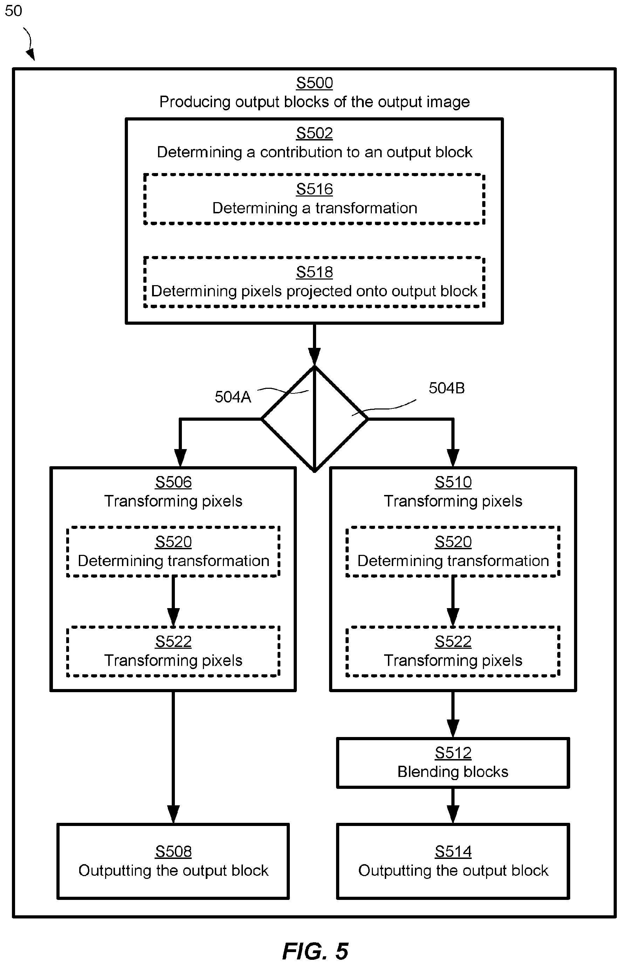

Figure 5 is a block scheme of a method 50 for producing an output image 430 of a scene 220 from a plurality of source images 400, 410 captured by different cameras 200, 210. The method 50 comprising: producing S500 output blocks of the output image 430 by: determining S502 a contribution to an output block of the output image 430 from each of the plurality of source images 400, 410; upon 504A the output block having a determined contribution from only one source image: transforming S506 pixels from the only one source image, thereby producing a transformed block, and outputting S508 the transformed block from the only one source image as the output block; or upon 504B the output block having a determined contribution from more than one source image: transforming S510 pixels from each source image that contributes to the output block, thereby producing a respective transformed block from each source image that contributes to the output block, blending S512 the transformed blocks from the source images that contribute to the output block, thereby producing a blended block, and outputting S514 the blended block as the output block.

The output blocks of the output image 430 may be produced on a block by block basis in raster order.

The transformed blocks may be blended using one or more of a multi-band blending, a content-aware blending, and alpha blending.

The act of determining S502 a contribution to the output block from each of the plurality of source images 400, 410 may comprise: determining S516, for each source image of the plurality of source images 400, 410, a respective transformation of the source image to the output image 430 based on an optical layout of the camera 200, 210 used to capture that source image; and determining S518, for each output block of the output image 430, which pixels from the plurality of source images 400, 410 that are projected onto the output block using the determined transformations.

The act of transforming S506, S510 a block from a source image may comprise: determining S520 a transformation of the source image to the output image based on an optical layout of the camera 200, 210 used to capture that source image; and transforming S522 pixels from the source image to the output image using the determined transformation.

The transformation may be a projection of a source image onto a projection surface 330.

The projection surface 330 may be one of a planar surface, a cylindrical surface, and a spherical surface.

The person skilled in the art realizes that the present inventive concept by no means is limited to the preferred variants described above. On the contrary, many modifications and variations are possible within the scope of the appended claims.

For example, the system 20 of Fig. 2 comprises two cameras 200, 210, however the system 20 may as well comprise three or more cameras. Depending on how the cameras are placed relative to each other, the skilled person would be aware of how the combination of the respective images may change. Further, the system 20 of Fig. 2 is illustrated as separate devices, however, it is to be understood that the system 20 may be implemented in a single device. For example, the arrangement illustrated in Fig. 4 may further comprise a third source image. The third source image may, e.g. be captured by a third camera which is arranged such that the first source image, the second source image, and the third source has an overlap. The output blocks for such an overlap may be formed by transforming and blending image data associated with pixels of the first source image, the second source image, and the third source image.

As a further example, the steps of the method 50 may be described as being performed in a specific order. However, it is to be understood that the steps may be performed in a different order than described here. It is further to be understood that some steps of the method 50 may be performed in parallel (i.e. simultaneous).

Additionally, variations to the disclosed variants can be understood and effected by the skilled person in practicing the claimed invention, from a study of the drawings, the disclosure, and the appended claims.

## Claims

1. A method (50) for producing an output image (430) of a scene (220) from a plurality of source images (400, 410) captured by different cameras (200, 210), the method (50) comprising:
producing (S500) output blocks of the output image (430) by:
determining (S502) a contribution to an output block of the output image (430) from each of the plurality of source images (400, 410);
upon (504A) the output block having a determined contribution from only one source image:
transforming (S506) pixels from the only one source image, thereby producing a transformed block, and
outputting (S508) the transformed block from the only one source image as the output block; or
upon (504B) the output block having a determined contribution from more than one source image:
transforming (S510) pixels from each source image that contributes to the output block, thereby producing a respective transformed block from each source image that contributes to the output block,
blending (S512) the transformed blocks from the source images that contribute to the output block, thereby producing a blended block, and
outputting (S514) the blended block as the output block.

2. The method (50) according to claim 1, wherein the output blocks of the output image (430) are produced on a block by block basis in raster order.

3. The method (50) according to claim 1 or 2, wherein the transformed blocks are blended using one or more of a multi-band blending, a content-aware blending, and alpha blending.

4. The method (50) according to any one of claims 1 - 3, wherein the act of determining (S502) a contribution to the output block from each of the plurality of source images (400, 410) comprises:
determining (S516), for each source image of the plurality of source images (400, 410), a respective transformation of the source image to the output image (430) based on an optical layout of the camera (200, 210) used to capture that source image; and
determining (S518), for each output block of the output image (430), which pixels from the plurality of source images (400, 410) that are projected onto the output block using the determined transformations.

5. The method (50) according to any one of claims 1 - 4, wherein the act of transforming (S506, S510) a block from a source image comprises:
determining (S520) a transformation of the source image to the output image based on an optical layout of the camera (200, 210) used to capture that source image; and
transforming (S522) pixels from the source image to the output image using the determined transformation.

6. The method (50) according to any one of claims 4 or 5, wherein the transformation is a projection of a source image onto a projection surface (330).

7. The method (50) according to claim 6, wherein the projection surface (330) is one of a planar surface, a cylindrical surface, and a spherical surface.

8. An image processing device (10) for producing an output image of a scene from a plurality of source images (400, 410) captured by different cameras (200, 210), the image processing device (10) comprising circuitry (100) configured to execute:
an acquisition function (122) configured to acquire the plurality of source images (400, 410);
wherein the circuitry (100) is configured to produce output blocks of the output image (430) by executing:
a contribution function (124) configured to determine a contribution to an output block of the output image (430) from each of the plurality of source images (400, 410),
a transformation function (126) configured to:
upon the output block having a determined contribution from only one source image, transform pixels from the only one source image, thereby producing a transformed block, or
upon the output block having a determined contribution from more than one source image, transform pixels from each source image that contributes to the output block, thereby producing a respective transformed block from each source image that contributes to the output block, and to blend the transformed blocks from the source images that contribute to the output block, thereby producing a blended block, and
an output function (128) configured to output the transformed block from the only one source image or the blended block as the output block.

9. The image processing device (10) according to claim 8, wherein the circuitry (100) is configured to produce output blocks of the output image (430) on a block by block basis in raster order.

10. The image processing device (10) according to claim 8 or 9,
wherein the transformation function (126) is configured to blend the transformed blocks by being configured to use one or more of a multi-band blending, a content-aware blending, and alpha blending.

11. The image processing device (10) according to any one of claims 8-10, wherein the contribution function (124) is configured to determine a contribution to an output block of the output image (430) from each of the plurality of source images (400, 410) by being configured to:
determine, for each source image of the plurality of source images (400, 410), a respective transformation of the source image to the output image (430) based on an optical layout of the camera (200, 210) used to capture that source image; and
determine, for each output block of the output image (430), which pixels from the plurality of source images (400, 410) that are projected onto the output block using the determined transformations.

12. The image processing device (10) according to any one of claims 8-11, wherein the transformation function (126) is configured to transform a block from a source image by being configured to:
determine a transformation of the source image to the output image (430) based on an optical layout of the camera (200, 210) used to capture that source image; and
transform pixels from the source image to the output image (430) using the determined transformation.

13. The image processing device (10) according to claim 11 or 12, wherein the transformation is a projection of a source image onto a projection surface (330).

14. A system (20) comprising:
a plurality of cameras (200, 210), wherein each camera of the plurality of cameras (200, 210) is configured to capture a respective source image (400, 410) of a scene (220); and
an image processing device (10) according to any one of claims 8-12.

15. A non-transitory computer-readable storage medium (120) comprising program code portions which, when executed on a device having processing capabilities performs the method (50) according to any one of claims 1-7.
